# EUROPEAN PATENT APPLICATION

(11) **EP 4 199 263 A1**
(43) Date of publication of application: **21.06.2023**
(21) Application number: 22213144.3
(22) Date of filing: 13.12.2022
(51) Int. Cl.: H01R 4/48, H01R 11/09

(54) **METAL CONDUCTIVE ASSEMBLY AND TERMINAL BLOCK FOR CLAMPING ELECTRIC CONDUCTOR**

(30) Priority: 16.12.2021 CN 202123201085 U
(71) Applicant: Openwise Industrial Limited, Chai Wan, Hong Kong (HK)
(72) Inventor: CHEN, Yunpeng, Hong Kong (HK); KWOK, Ka Kin, Hong Kong (HK)
(74) Representative: Gregorj S.r.l.

(57) **Abstract**

The present invention provides a conductive assembly for securing one or more wire conductors comprising a clamping member (1) and a busbar (2), two sides of the clamping member (1) being respectively provided with a first clamping end portion (11) and a second clamping end portion (12), both inclining towards an inner side of the clamping member (1) and a side of the busbar (2), both free ends of the first clamping end portion (11) and the second clamping end portion (12) being in contact with the busbar (2) and each forming an acute angle a, the clamping member (1) and the busbar (2) being detachably coupled to each other. A terminal block incorporating said conductive assembly is also disclosed.

## Description

### FIELD OF THE INVENTION

The present invention relates to the technical field of conductive components, in particular, to a metal conductive assembly within a terminal block.

### BACKGROUND OF THE INVENTION

At present, metal conductive elements are widely used in terminal blocks. In a typical terminal block, a portion of the busbar is directly embedded into the protective housing of the terminal block, which in a way complicating the manufacturing process and the assembly process. Further, deviations are inevitable in the manufacturing or assembly process of the above terminal block, leading to poor assembling quality, and thus reducing the operation stability the terminal block. Furthermore, after a prolong period of using the terminal block, if the internal parts are damaged, the damaged parts cannot be easily replaced due to the aforementioned arrangement. In addition, known metal conductive elements or assembly for use in terminal blocks have complex structures hindering the compatibility with other electronic parts in the assembly process. When being inserted with wires, the connection of the conductive assembly and the wires often cannot be securely maintained. In the event that if the wire is withdrawn or being stuck within the terminal block, electrical leakage or malfunctioning may occur, hence increasing the safety risk for the user, and the useability of the terminal block is reduced.

### SUMMARY OF THE INVENTION

The present invention provides a conductive assembly for a terminal block, aiming to addressing or at least alleviating the aforementioned drawbacks in the processes of producing, manufacturing and assembling of a conductive assembly in a terminal block. According to a first aspect of the present invention, there is provided a conductive assembly for securing one or more wire conductors, comprising: a clamping member and a busbar, two sides of the clamping member being respectively provided with a first clamping end portion and a second clamping end portion, both inclining towards an inner side of the clamping member and a side of the busbar, both free ends of the first clamping end portion and the second clamping end portion being in contact with the busbar and each forming an acute angle α, the clamping member and the busbar being detachably coupled to each other.

In an embodiment, between the first clamping end portion and the second clamping end portion of the clamping member lies a structure exhibiting shape of the character "Ω", and each of the first clamping end portion and the second clamping end portion is connected to the Ω-shaped structure through a lower end face, integrally forming the clamping member.

In an embodiment, a cross-sectional of the clamping member is in shape of an arc.

In an embodiment, a first pressing slot and a second pressing slot are provided in positions right above the first clamping end portion and the second clamping end portion of the busbar, respectively.

In an embodiment, the clamping member is of a symmetrical structure.

In an embodiment, a first mounting slot is provided on an upper surface of the Ω-shaped structure along a symmetrical plane of the clamping member, and the busbar is provided with a first mounting projection engageable with the first mounting slot.

According to a second aspect of the present invention, there is provided a terminal block comprising the conductive assembly as described above, a protective housing and a pressing member, the protective housing comprising a protective main body and an outlet cap, one side of the protective main body being provided with an installation opening for detachably connecting with the outlet cap, and the conductive assembly being arranged in an internal cavity of the protective main body through the installation opening.

In an embodiment, a third pressing slot and a fourth pressing slot, in alignment with the first pressing slot and the second pressing slot are provided in an upper surface of the protective main body.

In an embodiment, the pressing member is provided with a first pressing portion and a second pressing portion for applying an acting force to the first clamping end portion and the second clamping end portion, respectively.

In an embodiment, a second mounting slot is provided on the upper surface of the protective body, and the pressing member is provided with a second mounting projection engageable with the second mounting slot.

Comparing with the prior art, the present invention provides the advantages that the assembling of the conductive assembly is simple and reliable, by having the clamping assembly and the busbar fixedly connected, via providing the first clamping hole on the clamping assembly and the first clamping block on the busbar. In addition, providing a first and second pressing opening on the busbar avoids the use of complicated pressing mechanism within the terminal block, while it is only necessary to provide corresponding pressing openings on the protective housing for the pressing member to apply a force to the first clamping end surface and the second clamping end surface. The above resulted in a terminal block that is simple, easy to use, and practical.

### BRIEF DESCRIPTION OF THE DRAWINGS

FIG. 1 is a perspective view of the metal conductive assembly of the present invention;
FIG. 2 is a front view of the metal conductive assembly of FIG. 1;
FIG. 3 is a perspective view of the clamping member of FIG. 1;
FIG. 4 is a front view of the clamping member of FIG. 1;
FIG. 5 is a perspective view of the busbar of FIG. 1;
FIG. 6 is a bottom view of the busbar of FIG. 1;
FIG. 7 is a side view of the busbar of FIG. 1;
FIG. 8 is a perspective view of another metal conductive assembly of the present invention;
FIG. 9 is a bottom view of the busbar of FIG. 8;
FIG. 10 is a perspective view of the clamping assembly of FIG. 8;
FIG. 11 is a perspective view of a terminal block according to the present invention;
FIG. 12 is a top view of the terminal block of FIG. 11;
FIG. 13 is a cross-sectional view of the terminal block along B-B of FIG. 12;
FIG. 14 is a top view of the terminal block with wires inserted; and
FIG. 15 is a cross-sectional view of the terminal block along C-C of FIG. 14.

### DETAILED DESCRIPTION OF EMBODIMENTS

In the description of the present invention, it is to be understood that the terms "center", "upper", "lower", "front", "rear", "left", "right", "inner", "outer", and the like, indicate orientations or positional relationships based on the orientations or positional relationships shown in the drawings, are only for convenience of description and simplicity of description, and do not indicate or imply that the device or element being referred to must have a particular orientation, be constructed and operated in a particular orientation, and thus, should not be construed as limiting the present invention. In the present invention, the positive direction of the X axis is the left, the negative direction thereof is the right, the positive direction of the Y axis is the front, the negative direction thereof is the rear, the positive direction of the Z axis is the up, and the negative direction thereof is the down.

Furthermore, the terms "first", "second" and "first" are used for descriptive purposes only and are not to be construed as indicating or implying relative importance or to implicitly indicate the number of technical features indicated. Thus, a feature defined as "first" or "second" may explicitly or implicitly include at least one such feature. In the description of the present invention, "a plurality" means at least two, e.g., two, three, etc., unless explicitly specified otherwise.

In the present invention, unless otherwise expressly stated or limited, the terms "mounted," "connected," "secured," and the like are to be construed broadly and can, for example, be fixedly connected, detachably connected, or integrally formed; can be mechanically or electrically connected; they may be directly connected or indirectly connected through intervening media, or they may be connected internally or in any other suitable relationship, unless expressly stated otherwise. The specific meanings of the above terms in the present invention can be understood by those skilled in the art according to specific situations.

In the present invention, unless otherwise expressly stated or limited, the first feature "on" or "under" the second feature may be directly contacting the first and second features or indirectly contacting the first and second features through an intermediate. Also, a first feature "on," "over," and "above" a second feature may be directly or diagonally above the second feature, or may simply indicate that the first feature is at a higher level than the second feature.

In the description herein, references to the description of the terms "embodiment," "example," "specific example" or the like are intended to mean that a particular feature, structure, material, or characteristic described in connection with the embodiment or example is included in at least one embodiment or example of the present invention. In this specification, the schematic representations of the terms used above are not necessarily intended to refer to the same embodiment or example. Furthermore, the particular features, structures, materials, or characteristics described may be combined in any suitable manner in any one or more embodiments or examples. Furthermore, various embodiments or examples and features of different embodiments or examples described in this specification can be combined and combined by one skilled in the art without contradiction.

### Embodiment 1

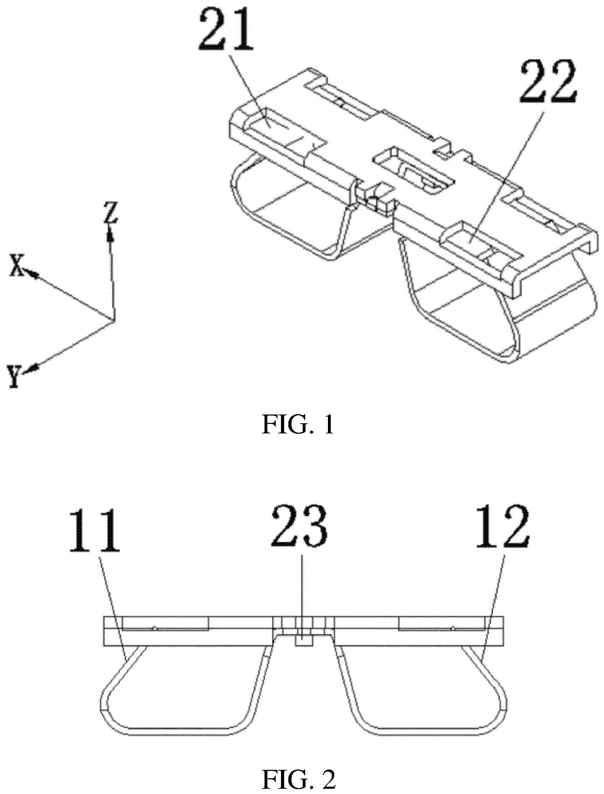

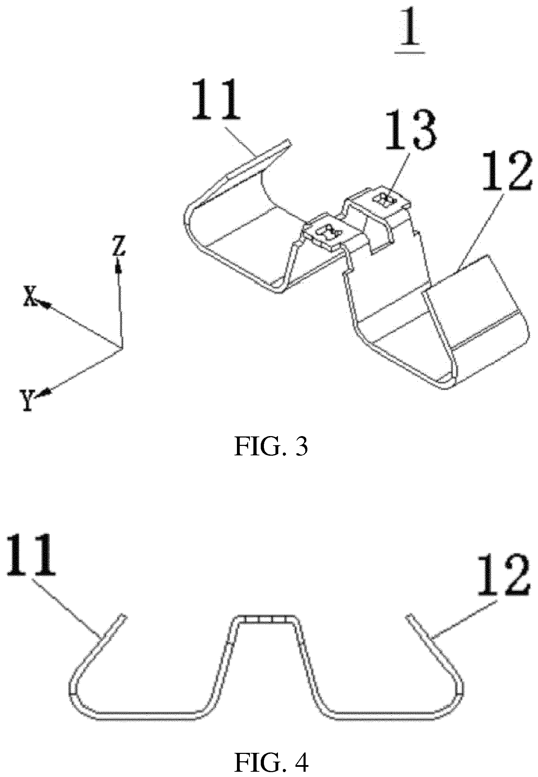

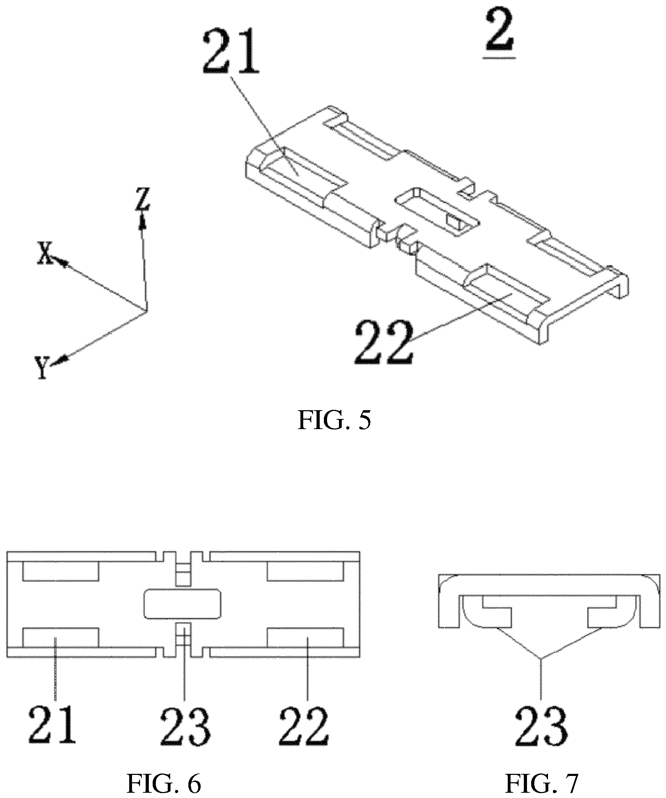

As shown in FIG. 1 to FIG. 7, the metal conductive assembly is a bilaterally symmetrical structure comprising a clamping member 1 and a busbar 2. The clamping member 1 is fixedly connected with the busbar 2. The left side and the right side of the clamping member 1 are respectively provided with a first clamping end portion 11 and a second clamping end portion 12, which are inclined towards an inner side of the clamping member 1 and the side of the busbar 2. As shown in FIG. 2, the free ends of the first clamping end portion 11 and the second clamping end portion 12 are both in contact with the busbar 2, each forming an acute angle α.

The structure of the clamping member 1, in particular, between the first clamping end portion 11 and the second clamping end portion 12, exhibits a shape resembling the character "Ω" (or the Chinese character " 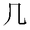 "). Specifically, each of the first clamping end portion 11, the second clamping end portion 12 are connected to the "Q" shaped structure via a respective lower end portion, forming the clamping member 1. In a preferred embodiment, the clamping member 1 (i.e., the first clamping end portion 11, the second clamping end portion 12 and the "Ω" shaped structure) is integrally formed. The transitions between the first clamping end portion 11 and its respective lower end portion, the second clamping end portion 12 and its respective lower end portion, exhibits an arc shaped cross-sectional profile. Similarly, the transitions between adjacent portions of the "Ω" shaped structure and the lower end portions also have cross-sectional profile of an arc shape. The radius of each of the transitions may be chosen according to practical requirement, as long as sufficient resilience is provided in order for the first and second clamping end portions 11, 12 to clamp down on the wire conductor 5 and achieving electrical contact with the busbar 2, while not causing any adverse effect for the assembling of the terminal block.

Furthermore, on the upper surface of the "Ω" shaped structure, there are provided two first mounting slots 13, arranged along a symmetrical plane of the conductive assembly. For instance, the busbar 2 is made from a copper substrate with a horizontal cross-section of a rectangular shape. At the bottom surface of the busbar 2, there is provided a first mounting projection 23, for instance, a catch hook, engageable with the first mounting slots 13. On two sides of the first mounting projection 23, right above the first clamping end portion 11 and the second clamping end portion 12, there are provided a first pressing slot 21 and a second pressing slot 22, respectively. In particular, the first mounting projection 23 is disposed at both lateral sides of the bottom face of the busbar 2. Each of the first pressing slot 21 and second pressing slot 22 is provided with a center position arranged right above the first clamping end portion 11 and the second clamping end portion 12. The contact points between the busbar 2 and the first clamping end portion 11 and the second clamping end portion 12 are located on the bottom face, and at the first pressing slot 21 and the second pressing slot 22.

As an optional embodiment, before the busbar 2 is coupled to the clamping member 1, the first mounting projection 23 lies perpendicular to the busbar 2. During assembling, the mounting projection 23 goes through the first mounting slot 13 and then subjects to a bend, such that the clamping member 1 is detachably coupled to the busbar 2.

After the metal conductive assembly is installed as described above, into a terminal block, when a force is applied to the first clamping end portion 11 and the second clamping end portion 12, the first clamping end portion 11 and the second clamping end portion 12 bends downward, creating a separation gap between the busbar 2, and the first clamping end portion 11 and the second clamping end portion 12. When the force is removed, the first clamping end portion 11 and the second clamping end portion 12 act in an opposite manner and bias against the wire conductor 5, thereby establishing electrical connection between the busbar 2 and the wire conductor 5.

### Embodiment 2

Comparing with embodiment 1, the present embodiment is different in that there are provided two, three or more first mounting projections 23. The positions of the first mounting portions 23 can be located near the symmetrical plane of the conductive assembly, or other suitable positions, as long as the clamping member 1 and the busbar 2 can be fixedly attached together.

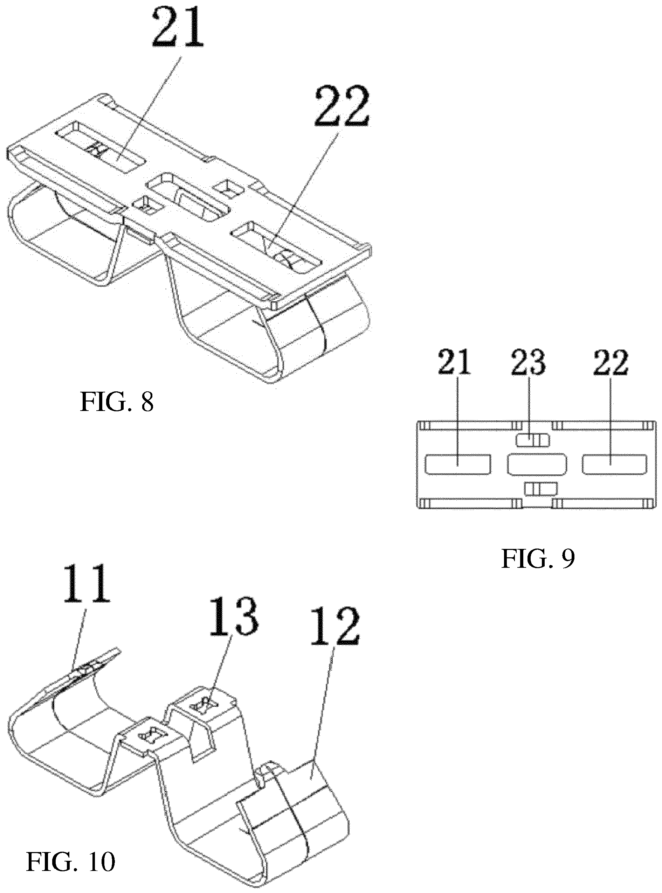

In addition, there may be two sets of first pressing slots 21 and second pressing slots 22, which are respectively located right above the first clamping end portion 11 and the second clamping end portion 12, and are in proximity to two ends of the busbar 2. As shown in FIG. 8 to FIG. 10, the contact points between the busbar 2 and the first clamping end portions 11 and the second clamping end portions 12 are located between, or within, the first pressing slot 21 and the second pressing slot 22, respectively. Other structures and arrangements of the conductive assembly are similar as those of embodiment 1.

### Embodiment 3

This embodiment provides a terminal block incorporating the metal conductive assemblies described in embodiment 1 or embodiment 2, and the embodiment is described in the following.

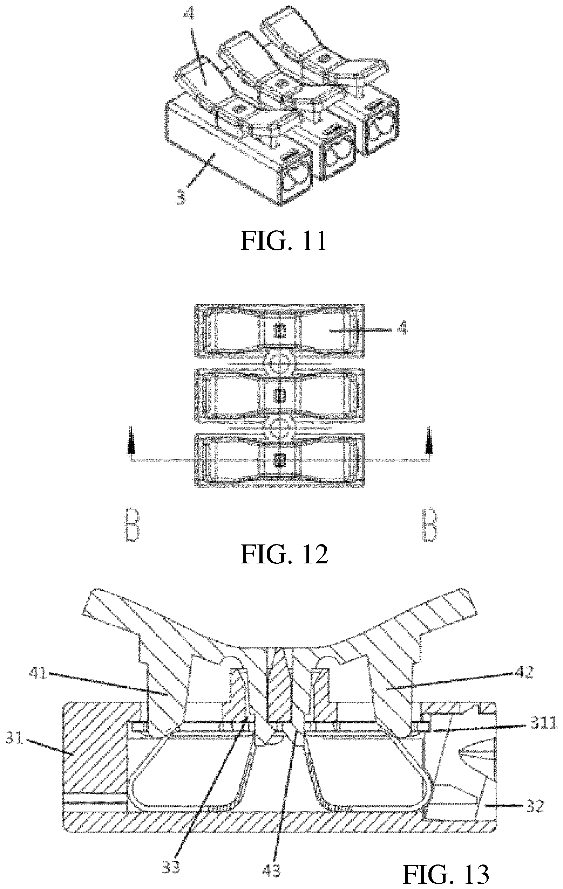

This embodiment provides a terminal block as shown in FIG. 11 to FIG. 13. The terminal block includes a conductive assembly, a protective housing 3 and a pressing member 4. The protective housing 3 is consisted of a protective main body 31 and an outlet cap 32.

The protective main body 31 includes a hollow internal cavity. The internal cavity has a size that is comparable to the conductive assembly, which ensures that the conductive assembly can be secured within the protective main body 31 in the top and bottom, and front and rear directions, such that any movement of conductive assembly within the protective main body can be avoided.

An installation opening 311, in spatial communication with the internal cavity, is provided at an end of the protective main body 31. The installation opening 311 allows for detachable connection between the outlet cap 32 and the protective main body 31. The conductive assembly is installed in the internal cavity through the installation opening 311. According to a preferred embodiment, the installation opening 311 is located at a right side of the protective main body 31. On a side of the installation opening 311, there is provided a third mounting slot, while a third mounting projection, engageable with the third mounting slot, is provided on the outlet cap 32. When the outlet cap 32 is coupled to the protective main body 31 through the engagement between the third mounting projection and the third mounting slot, the inner wall of the outlet cap 32 abuts against the conductive assembly, thus restricting the movement of the conductive assembly in the left and right directions.

A second mounting slot 33 is provided on the top surface of the protective main body 31, in a center position along the length of the protective main body 31. On both sides of the second mounting slot 33 on the main protective body 31, there are provided a first pressing slot 21 and a second pressing slot 22, aligning with a third pressing slot and a fourth pressing slot provided on the busbar 2, respectively.

The pressing member 4 is provided with a first pressing portion 41 and a second pressing portion 42, each provided for applying a force to the first clamping end portion 11 and the second clamping end portion 12, respectively. During assembling, the first pressing portion 41, sequentially, protrudes through the third pressing slot and the first pressing slot 21 then contacts with the first clamping end portion 11. Likewise, the second pressing portion 42, sequentially, protrudes through the fourth pressing slot and the second pressing slot 22 then contacts with the second clamping end portion 12.

The metal conductive assembly is positioned and secured within the internal cavity of protective main body 31 through the installation opening 311. The outlet cap 32 is subsequently coupled to the installation opening 311, such that the conductive assembly is enclosed and protected within the internal cavity of the protective main body 31. By providing an internal cavity with a suitable size with respect to the conductive assembly, the conductive assembly can be secured within the protective main body 31, and movements of the conductive assembly within the internal cavity can be effectively prevented. Such an arrangement allows for replacement of any damaged internal components of the terminal block. Thus, the operation of the terminal block can be stably maintained.

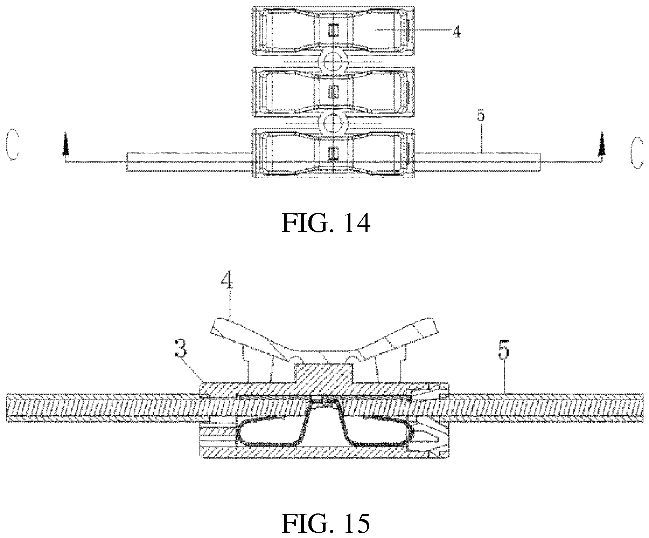

During use, a user presses on one end of the pressing member 4, an acting force causes the first pressing portion 41 or the second pressing portion 42 to act on the first clamping end portion 11 or the second clamping end portion 12. The first clamping end portion 11 or the second clamping end portion 12 is forced downward, creating a separation between the first/second clamping end portions 11, 12 and the busbar 2, thus resulting in a gap therebetween. A wire conductor 5 may therefore be inserted between the gap between the first/second clamping end portions 11, 12 and the busbar 2. Once the user releases the pressing member 4 which removes the acting force, the first/second clamping end portions 11, 12 acts in an opposite manner and bias against the wire conductor 5, thereby securing the wire conductor 5. Likewise, an acting force may be applied on another end of the pressing member 4, allowing another wire conductor 5 to be inserted and secured, thereby creating an electrical connection between the two wire conductors 5 via the busbar 2. FIGs. 14-15 illustrates the structure of the terminal block which both ends are inserted with a wire conductor 5.

### Embodiment 4

According to this embodiment, the busbar 2 is provided with additional openings in alignment with the first mounting slot 13 and the first mounting projection 23. Within the terminal block, the opening provides clearance to a second mounting projection 43 protrudes from the pressing member 4, so as to allows for a lower overall position of the pressing member 4, resulting in a more compact structure of terminal block.

It is worth noting that the number and the positions of the coupling engagements within the terminal block can be altered according to actual needs. Alternatively, other means for detachable coupling may be adopted, such as threaded engagement.

In addition, the parts of the terminal block, their structural arrangements and assembly relationship among the parts are embodied as non-limited examples in the present invention. It should be understood that the above-described embodiments of the present invention are merely examples for clearly illustrating the present invention, and are not intended to limit the embodiments of the present invention. Other variations and modifications will be apparent to persons skilled in the art in light of the above description. Any modification, equivalent replacement, and improvement made within the spirit and principle of the present invention are to be considered falling within the protection scope of the appended claim.

## Claims

1. A metal conductive assembly for securing one or more wire conductors, comprising: a clamping member (1) and a busbar (2), two sides of the clamping member (1) being respectively provided with a first clamping end portion (11) and a second clamping end portion (12), both inclining towards an inner side of the clamping member (1) and a side of the busbar (2), both free ends of the first clamping end portion (11) and the second clamping end portion (12) being in contact with the busbar (2) and each forming an acute angle α, the clamping member (1) and the busbar (2) being detachably coupled to each other.

2. The metal conductive assembly according to claim 1, wherein between the first clamping end portion (11) and the second clamping end portion (12) of the clamping member (1) lies a structure exhibiting shape of the character "Ω", and each of the first clamping end portion (11) and the second clamping end portion (12) is connected to the Ω-shaped structure through a lower end face, integrally forming the clamping member (1).

3. The metal conductive assembly according to claim 2, wherein a cross-sectional of the clamping member (1) is in shape of an arc.

4. The metal conductive assembly according to claim 2, wherein a first pressing slot (21) and a second pressing slot (22) are provided in positions right above the first clamping end portion (11) and the second clamping end portion (12) of the busbar (2), respectively.

5. The metal conductive assembly according to claim 2, wherein the clamping member (1) is of a symmetrical structure.

6. The metal conductive assembly according to claim 5, wherein a first mounting slot (13) is provided on an upper surface of the Ω-shaped structure along a symmetrical plane of the clamping member (1), and the busbar (2) is provided with a first mounting projection (23) engageable with the first mounting slot (13).

7. A terminal block, comprising the metal conductive assembly according to any one of claim 1 to claim 6, a protective housing (3) and a pressing member (4), the protective housing (3) comprising a protective main body (31) and an outlet cap (32); one side of the protective main body (31) being provided with an installation opening (311) for detachably connecting with the outlet cap (32), and the conductive assembly being arranged in an internal cavity of the protective main body (31) through the installation opening (311).

8. The terminal block according to claim 7, wherein a third pressing slot and a fourth pressing slot, in alignment with the first pressing slot (21) and the second pressing slot (22), are provided in an upper surface of the protective main body (31).

9. The terminal block according to claim 7, wherein the pressing member (4) is provided with a first pressing portion (41) and a second pressing portion (42) for applying an acting force to the first clamping end portion (11) and the second clamping end portion (12), respectively.

10. The terminal block according to claim 7, wherein a second mounting slot (33) is provided on the upper surface of the protective body (31), and the pressing member (4) is provided with a second mounting projection (43) engageable with the second mounting slot (33).
